# EUROPÄISCHE PATENTSCHRIFT

(11) **EP 2 640 993 B1**
(45) Veröffentlichungstag und Bekanntmachung des Hinweises auf die Patenterteilung: **11.01.2017**
(21) Anmeldenummer: 11822794.1
(22) Anmeldetag: 07.11.2011
(51) Int. Cl.: F16D 13/75

(54) **NACHSTELLEINRICHTUNG**
TAKING-UP DEVICE
DISPOSITIF DE RATTRAPAGE

(30) Priorität: 19.11.2010 DE 102010052021; 24.08.2011 DE 102011081476; 24.08.2011 DE 102011081475
(43) Veröffentlichungstag der Anmeldung: 25.09.2013
(73) Patentinhaber: Schaeffler Technologies AG & Co. KG, 91074 Herzogenaurach (DE)
(72) Erfinder: RABER, Christoph, 66564 Ottweiler-Steinbach (DE); ASAL, Christian, 79677 Schönau (DE)
(86) Internationale Anmeldenummer: PCT/DE2011/001938
(87) Internationale Veröffentlichungsnummer: WO 2012/065589

(56) Entgegenhaltungen:
- DE-A1-102005 058 844
- DE-A1-102011 102 307
- US-A- 4 228 883

## Beschreibung

Die Erfindung betrifft eine Nachstelleinrichtung für eine Reibungskupplung gemäß dem Oberbegriff des Patentanspruchs 1. Insbesondere betrifft die vorliegende Erfindung eine Nachstelleinrichtung für eine Reibungskupplung eines Kraftfahrzeugs, mit dessen Hilfe ein verschleißbedingter Fehlabstand einer Anpressplatte zu einer Gegenplatte der Reibungskupplung nachgestellt werden kann.

Reibungskupplungen können zum Ausgleich eines auftretenden Verschleißes von Reibbelägen mit einer kraftgesteuerten Nachstelleinrichtung versehen sein. Hier wird eine infolge eines Verschleißes ungünstige Entwicklung der Anpresskraft eines eine Gegenplatte der Reibungskupplung beaufschlagenden Betätigungssystems zur Bewegung der Anpressplatte, beispielsweise einer Tellerfeder, erfasst und abhängig von der Anpresskraft eine Nachstellung bewirkt. Alternativ kann ein bei einem Verschleiß der Reibbeläge der Kupplungsscheibe auftretender Fehlabstand zwischen dem Kupplungsgehäuse und dem Betätigungssystem ermittelt ("sensieren") und abhängig von dem Fehlabstand korrigiert werden. Zur Korrektur werden dabei zwischen der Gegenplatte und dem Betätigungssystem angeordnete Ausgleichsmittel wie Rampensysteme oder Gewinde verdreht.

Aus EP 0 769 632 A2 ist eine weggesteuerte Nachstelleinrichtung bekannt, bei der eine sich in Abhängigkeit vom Abstand eines Betätigungssystems mit einer Tellerfeder und einer Anpressplatte axial verlagernde Antriebsklinke eines Sensierblechs auf ein Ritzel einer axial bewegbaren Spindel wirkt, wobei eine auf der Spindel aufgenommene Spindelmutter bei Verdrehung der Spindel eine Feder vorspannt, die bei einem Lösen der Kupplung durch die axiale Verschiebung der Spindel einen zwischen der Anpressplatte und der Tellerfeder angeordneten Rampenring eines Rampensystems relativ zu einer Gegenrampe der Anpressplatte verdreht, wodurch der ursprüngliche Abstand des Betätigungssystems zur Anpressplatte wieder hergestellt wird. Dabei gleitet während des Hubs einer Gegenplatte gegenüber der Anpressplatte die Antriebsklinke auf den Zähnen des Ritzels und rastet bei einem vorgegebenen Verschleiß in eine Zahnlücke zwischen zwei Zähnen ein. Die Antriebsklinke nimmt das Ritzel formschlüssig mit und verdreht dabei das Ritzel und damit die Spindel, wodurch die Spindelmutter entlang der Spindel bewegt wird und den Rampenring um einen entsprechenden Winkelbetrag verdreht, um die Reibungskupplung dadurch nachzustellen. Um nach einem Nachstellen der Reibungskupplung ein reibungsbedingtes Rückdrehen des Ritzels zu vermeiden, greift ein zusätzliches Halteblech in das Ritzel ein.

Es besteht eine Gefahr, dass die in das Ritzel eingreifenden Klinken beschädigt werden können, wodurch die Nachstellfunktion der Nachstelleinrichtung beeinträchtigt werden kann.

Ferner ist aus der DE 10 2005 058 844 A1 eine Nachstelleinrichtung für eine Reibungskupplung bekannt, die auf den Oberbegriff des Patentanspruchs 1 lesbar ist.

Es ist die Aufgabe der Erfindung eine robuste Nachstelleinrichtung für eine Reibungskupplung, insbesondere Zweischeibenkupplung, eines Kraftfahrzeugs zu schaffen.

Die Lösung der Aufgabe erfolgt erfindungsgemäß durch die Merkmale des Anspruchs 1. Bevorzugte Ausgestaltungen der Erfindung sind in den Unteransprüchen angegeben.

Die erfindungsgemäße Nachstelleinrichtung für eine Reibungskupplung eines Kraftfahrzeugs ist mit einer Spindel, einer auf der Spindel aufgeschraubten Spindelmutter zum Mitnehmen eines Nachstellelements zur Nachstellung eines verschließbedingten Fehlabstands zwischen einer Gegenplatte und einer Anpressplatte zum Verpressen einer Kupplungsscheibe zwischen der Anpressplatte und der Gegenplatte, und einem im Wesentlichen kraftschlüssigen und/oder im Wesentlichen stufenlosen Verschwenkmittel zum Verschwenken der Spindel zur Nachstellung des verschließbedingten Fehlabstands ausgestattet, wobei das Verschwenkmittel ein Schlingseil aufweist, das um eine Trommel gewickelt ist, die mit der Spindel verbunden ist.

Vorzugsweise ist das Schlingseil an einem ersten Ende mit einem ersten Federelement verbunden.

Mit Hilfe des Schlingseils kann die Spindel verschwenkt bzw. verdreht werden, ohne dass hierfür eine Antriebsklinke erforderlich ist, so dass die Gefahr einer Beeinträchtigung der Nachstellfunktion durch verbogene oder geknickte Bauteile reduziert ist. Die Nachstelleinrichtung ist dadurch robuster. Ferner erfolgt die Verschwenkung bzw. Verdrehung durch das Schlingseil kraftschlüssig, insbesondere reibschlüssig, und gleichzeitig stufenlos, da die Trommel nicht als Antriebsritzel ausgebildet ist und somit keine Zahnstruktur aufweist, in die die nichtvorhandene Antriebsklinke zur Verdrehung formschlüssig eingreifen muss.

Gleichzeitig kann durch das erste Federelement bei einem Drehen der Spindel ein Längenausgleich erfolgen und die angreifende Seilkraft erhöht werden, so dass ein Durchrutschen des Schlingseils bei einem sensierten Verschleiß vermieden ist. Insbesondere ist es möglich, beispielsweise durch eine Erhöhung der Selbsthemmung der Spindel bei einem sensierten Verschleiß, ein erhöhtes Rückstellmoment bereitzustellen, das so hoch ist, dass bei nachlassender Federkraft des ersten Federelements die Reibung zwischen dem Schlingseil und der Trommel überwunden werden kann, so dass das Schlingseil an der Trommel durchrutschen kann. Dadurch ist es möglich ein in ein Ritzel eingreifendes Halteblech und das Ritzel selbst einzusparen, wodurch der Aufbau der Nachstelleinrichtung vereinfacht und robuster gestaltet ist. Insbesondere kann eine gesonderte Rückdrehsicherung eingespart werden. Da sich relativ zur Spindel bewegende Klinken, deren Kinematik sich im Laufe der Lebensdauer der Nachstelleinrichtung verändert, vermieden sind, kann die Nachstelleinrichtung auch für besonders große Nachstellwege eingesetzt werden. Die Nachstelleinrichtung kann vorzugsweise für Zweischeibenkupplungen oder Mehrscheibenkupplungen mit zwei oder mehr zu verpressenden Kupplungsscheiben vorgesehen werden.

Der Querschnitt des Schlingseils kann flach, rechteckig, quadratisch, dreieckig oder trapezförmig sein. Die Geometrie der Trommel ist insbesondere an den Seilquerschnitt angepasst. Die Trommel kann hierzu beispielsweise eine in Umfangsrichtung verlaufende schraubenförmige Aufnahmenut zur Aufnahme des Schlingseils aufweisen. Insbesondere entspricht der Querschnitt der Aufnahmenut im Wesentlichen dem Querschnitt des Schlingseils. Dadurch kann das Schlingseil auch seitlich an der Trommel anliegen und eine entsprechend höhere Reibungskraft bereitstellen. Der Umschlingungswinkel des Schlingseils an der Trommel kann dadurch gering gehalten werden, so dass das Schlingseil entsprechend kurz ausgeführt sein kann. Das erste Federelement kann als Druck- oder Zugfeder ausgeführt sein. Das Schlingseil kann beispielsweise mit beiden Enden mit einem Kupplungsdeckel der Reibungskupplung oder mit der Anpressplatte verbunden sein, wobei das erste Ende nur mittelbar über das erste Federelement angebunden ist. Ein Verdrehen der Spindel kann insbesondere dadurch ausgelöst werden, dass die Spindel bei einem sensierten Verschleiß relativ zur Befestigung des Schlingseils bewegt wird, so dass durch die Relativbewegung der Spindel zum Schlingseil das Schlingseil durch den Reibschluss mit der Trommel ein Drehen der Spindel verursacht.

Vorzugsweise ist ein von der Spindelmutter verspannbares zweites Federelement zum Übertragen einer Verstellkraft von der Spindelmutter auf das Nachstellelement vorgesehen. Das zweite Federelement ermöglicht es, den auf das Nachstellelement, beispielsweise einen Rampenring eines Rampensystems, aufzubringenden Nachstellweg zwischenzuspeichern. Dadurch kann bei einem Betätigen der Kupplung mit Hilfe eines Betätigungselements, beispielsweise einer Tellerfeder, die von dem Betätigungselement aufgebrachte Kraft genutzt werden, um die Spindel der Nachstelleinrichtung verdrehen zu können. Gleichzeitig ist es nicht erforderlich, das zwischen der Anpressplatte und dem Betätigungselement verklemmte Nachstellelement bei geschlossener Kupplung bewegen zu müssen. Stattdessen kann abgewartet werden, bis die Kupplung geöffnet wird und das Nachstellelement nicht mehr zwischen der Anpressplatte und dem Betätigungselement verklemmt ist. In diesem Zustand reicht die Federkraft des verspannten zweiten Federelements aus, um das Nachstellelement zum Ausgleich eines verschleißbedingten erhöhten Betätigungswegs für das Betätigungselement zu bewegen. Bis die an dem Nachstellelement angreifenden Reibungskräfte von der Federkraft des verspannten zweiten Federelements überwunden werden können, führt die zwischen dem Nachstellelement und der Spindelmutter wirkende Federkraft des verspannten zweiten Federelements zu einer erhöhten Selbsthemmung der Spindel, so dass zu Beginn der Öffnungsbewegung der Reibungskupplung das Schlingseil mit Hilfe des ersten Federelements relativ an der Trommel vorbeigezogen werden kann, so dass das Schlingseil in die Ausgangsposition zurückbewegt werden kann ohne die Spindel zurückzudrehen. Das zweite Federelement kann für die Funktion zur Zwischenspeicherung des Nachstellwegs an einer Seite mit der Spindelmutter oder mit dem Nachstellelement gegebenenfalls über einen zwischengeschalteten Mitnehmer befestigt sein. Das zweite Federelement kann beispielsweise als Blattfeder, Tellerfeder oder Spiralfeder ausgestaltet sein.

Das Nachstellelement kann insbesondere Teil eines Rampensystems sein. Das Rampensystem kann insbesondere durch einen auf einer Gegenrampe abgleitenden Rampenring ausgebildet werden. Die Nachstelleinrichtung kann an dem Rampenring oder an der Gegenrampe angreifen, um den Rampenring in Umfangsrichtung relativ zur Gegenrampe zu verdrehen. Es ist auch möglich, dass das Rampensystem mehrere in Umfangsrichtung verteilte Rampen aufweist. Die Rampe und die Gegenrampe können auch Teil einer Verschraubung sein, so dass der Rampenring in einem oder mehreren Gewindegängen der Verschraubung auf der Gegenrampe abgleiten kann.

Insbesondere ist die Spindel um eine exzentrisch zur Mittelachse der Spindel verlaufende Schwenkachse verschwenkbar. Die Schwenkachse kann vorzugsweise im Wesentlichen parallel zur Mittelachse der Spindel verlaufen. Durch das exzentrische Verschwenken der Spindel kann die Spindel bei einem sensierten Verschleiß auf einer Kreisbahn bewegt werden. Bei dieser Bewegung nimmt die Spindel das an der Trommel anliegende Schlingseil mit, wodurch das erste Federelement ausgelenkt wird und eine erhöhte Seilkraft bereitstellt. Dadurch kann das Schlingseil die Trommel verdrehen ohne an der Trommel abzugleiten. Die Trommel verdreht die Spindel, wodurch die Spindelschraube axial auf der Spindel bewegt wird.

Besonders bevorzugt ist die Spindel in einer schwenkbar mit einem Halter verbundenen Wippe gelagert, wobei die Wippe insbesondere über einen abstehenden Ansatz von einem Betätigungselement zum Anpressen der Anpressplatte verschwenkbar ist, wobei die Trommel durch das Verschwenken der Wippe verdrehbar ist. Bei einem zu starken Verschleiß der Reibbeläge der Kupplungsscheibe kann das Betätigungselement einen so langen Hubweg erfahren, dass das Betätigungselement an der Wippe anschlägt und die Spindel verschwenkt. Dies führt zu einem automatischen Sensieren eines Verschleißes. Mit Hilfe der Wippe kann ein Verdrehen der Trommel durch das anliegende Schlingseil erreicht werden, so dass automatisch ein Nachstellen zum Ausgleich des verschleißbedingten Fehlabstands des Betätigungselements zur Anpressplatte erfolgen kann. Insbesondere ist mindestens ein Anschlag zur Begrenzung der Winkellage der Wippe bei einem Abheben der Anpressplatte von der Gegenplatte vorgesehen. Eine unnötige Rückbewegung der Wippe, welche die gewünschten Eingriffsverhältnisse des Schlingseils an der Trommel beieinträchtigen könnte, wird dadurch vermieden. Besonders bevorzugt kann die Spindel zusammen mit der Spindelmutter, der Trommel, und gegebenenfalls dem Schlingseil und/oder dem zweiter Federelement als eine gemeinsame Baueinheit in die Wippe eingesetzt werden. Hierzu kann die Spindel an ihren axialen Enden beispielsweise mit Hilfe jeweils eines Montagebügels in die Wippe eingehängt und positioniert werden. Mit Hilfe der Montagebügel kann die Spindel in der Wippe durch Klemmen reibschlüssig befestigt werden, wobei insbesondere die Spindel relativ zum Montagebügel drehbar ist. Es ist nicht erforderlich in der Wippe Öffnungen zur Lagerung der Spindel vorzusehen. Ferner ist es einfach möglich die Baueinheit mit der Spindel zu demontieren, beispielsweise um Reparaturen vorzunehmen. Insbesondere kann dadurch bei Reparaturarbeiten leicht die Spindelmutter von Hand zurückgedreht werden, um bei einer Reparatur das Nachstellelement leichter bewegen zu können.

Vorzugsweise sind die Federkraft und die Vorspannung des ersten Federelements sowie die Federkraft und die Vorspannung des zweiten Federelements derart gewählt, dass bei einem Verdrehen der Trommel bei einem Anpressen der Anpressplatte das Schlingseil reibschlüssig mit der Trommel verbunden ist und bei einem Abheben der Anpressplatte von der Gegenplatte das Schlingseil an der Trommel durchrutscht. Es ist möglich nur durch die Wahl einer geeigneten Federsteifigkeit und der Vorspannung der Federelemente ein Verdrehen der Spindel bei einem sensierten Verschleiß zu ermöglichen und eine ungewollte Rückdrehung der Spindel zu vermeiden. Die Federkraft und die Vorspannung der Federelemente sind insbesondere an die Reibungsverhältnisse zwischen dem Schlingseil und der Trommel angepasst, so dass auch die Reibungskoeffizienten zwischen dem Schlingseil und der Trommel berücksichtigt werden können.

Insbesondere ist die Vorspannung des ersten Federelements, insbesondere mit Hilfe einer Einstellschraube, einstellbar. Die Vorspannkraft des ersten Federelements kann dadurch an verschiedene Bautypen von Reibungskupplungen, insbesondere Zweischeibenkupplung, angepasst werden. Insbesondere ist das erste Federelement als Blattfeder ausgestaltet, die mit Hilfe einer Einstellschraube gegen eine Anlage verspannt werden kann, um die Vorspannung einzustellen.

Vorzugsweise ist die Spindel in einem Halter insbesondere zur Befestigung mit einem Kupplungsdeckel aufgenommen, wobei das erste Ende des Schlingseils über das erste Federelement und das zweite Ende des Schlingseils direkt mit dem Halter verbunden ist. Die Nachstelleinheit kann dadurch als eine einzelne Baueinheit mit einem Kupplungsdeckel oder einem mit dem Kupplungsdeckel drehfest verbunden Bauteil als Ganzes befestigt werden. Es ist auch möglich die Nachstelleinrichtung mit einer Anpressplatte zu befestigen. Der Halter kann insbesondere über ein Langloch verschraubt werden, so dass die Nachstelleinrichtung für den Transport der Reibungskupplung derart in Längsrichtung des Langlochs verschoben werden kann, dass ein unbeabsichtigtes Nachstellen der Reibungskupplung, beispielsweise durch Erschütterungen beim Transport, vermieden werden kann. Bei der Montage der Reibungskupplung kann die Nachstelleinrichtung in Längsrichtung des Langlochs in die beabsichtigte Gebrauchsstellung verschoben und fixiert werden, so dass erst nach dem Verschieben aus der Transportlage in die Gebrauchsstellung über das Betätigungselement bei einem sensierten Verschleiß eine Kraft auf die Nachstelleinrichtung ausgeübt werden kann.

Die Erfindung betrifft ferner eine Reibungskupplung, insbesondere Zweischeibenkupplung, für ein Kraftfahrzeug, mit einer Gegenplatte und einer relativ zu der Gegenplatte bewegbaren Anpressplatte zum Verpressen einer Kupplungsscheibe zwischen der Gegenplatte und der Anpressplatte. Ferner ist ein Kupplungsdeckel zum zumindest teilweisen Abdecken der Anpressplatte und eine insbesondere mit dem Kupplungsdeckel verbundenen Nachstelleinrichtung zur Nachstellung eines verschleißbedingten Fehlabstands der Anpressplatte zur Gegenplatte vorgesehen, wobei die Nachstelleinrichtung wie vorstehend beschrieben aus- und weitergebildet sein kann. Mit Hilfe des Schlingseils kann die Spindel verdreht werden, ohne dass hierfür eine Antriebsklinke erforderlich ist, so dass die Gefahr einer Beeinträchtigung der Nachstellfunktion durch verbogene oder geknickte Bauteile reduziert ist. Die Reibungskupplung ist dadurch robuster.

Insbesondere ist die Nachstelleinrichtung radial außerhalb zur Anpressplatte angeordnet. Dadurch kann axialer Bauraum eingespart werden und/oder Bauraum für eine zweite Kupplungsscheiben oder weitere Kupplungsscheiben geschaffen werden. Die Nachstelleinrichtung ragt allenfalls mit einem Mitnehmer zur Betätigung des Nachstellelements und/oder einem Anschlag für das Betätigungselement in einen in axialer Verlängerung der Anpressplatte liegenden Bereich hinein. Insbesondere die Spindel und die Trommel sind vollständig radial außerhalb zur Anpressplatte angeordnet.

Vorzugsweise ist die Nachstelleinrichtung über mindestens ein Langloch mit dem Kupplungsdeckel oder der Anpressplatte verbunden, wobei in einer ersten Endlage des Langlochs eine Betätigung der Nachstelleinrichtung außer Funktion gesetzt ist und in einer zweiten Endlage des Langlochs eine Betätigung der Nachstelleinrichtung in Funktion gesetzt ist. Die Nachstelleinrichtung kann insbesondere über das Langloch verschraubt werden, so dass die Nachstelleinrichtung für den Transport der Reibungskupplung derart in Längsrichtung des Langlochs verschoben werden kann, dass ein unbeabsichtigtes Nachstellen der Reibungskupplung, beispielsweise durch Erschütterungen beim Transport, vermieden werden kann. Bei der Montage der Reibungskupplung kann die Nachstelleinrichtung in Längsrichtung des Langlochs in die beabsichtigte Gebrauchsstellung verschoben und fixiert werden, so dass erst nach dem Verschieben aus der Transportlage in die Gebrauchsstellung über das Betätigungselement bei einem sensierten Verschleiß eine Kraft auf die Nachstelleinrichtung ausgeübt werden kann. Das mindestens eine Langloch kann in einem Halter der Nachstelleinrichtung und/oder in einem Bauteil, beispielsweise Kupplungsdeckel, vorgesehen sein, mit dem die Nachstelleinrichtung verschraubt werden soll.

Nachfolgend wird die Erfindung unter Bezugnahme auf die anliegenden Zeichnungen anhand bevorzugter Ausführungsbeispiele exemplarisch erläutert. Es zeigen:
- Fig. 1:: eine schematische perspektivische Ansicht einer Nachstelleinrichtung,
- Fig. 2:: eine schematische Schnittansicht einer Reibungskupplung in einer ersten Position,
- Fig. 3:: eine schematische Seitenansicht der Nachstelleinrichtung der Reibungskupplung aus Fig. 2,
- Fig. 4:: eine schematische Schnittansicht der Reibungskupplung in einer zweiten Position,
- Fig. 5:: eine schematische Schnittansicht der Reibungskupplung in einer dritten Position,
- Fig. 6:: eine schematische Seitenansicht der Nachstelleinrichtung der Reibungskupplung aus Fig. 5,
- Fig. 7:: eine schematische Schnittansicht der Reibungskupplung in einer vierten Position,
- Fig. 8:: eine schematische Schnittansicht der Reibungskupplung in einer fünften Position,
- Fig. 9:: eine schematische Draufsicht der Nachstelleinrichtung der Reibungskupplung aus Fig. 4,
- Fig. 10:: eine schematische Draufsicht der Nachstelleinrichtung der Reibungskupplung aus Fig. 7,
- Fig. 11:: eine schematische teilweise freigeschnittene perspektivische Ansicht der Reibungskupplung und
- Fig. 12:: eine schematische perspektivische Ansicht der Reibungskupplung aus Fig. 11 mit zusätzlich montierten Bauteilen.

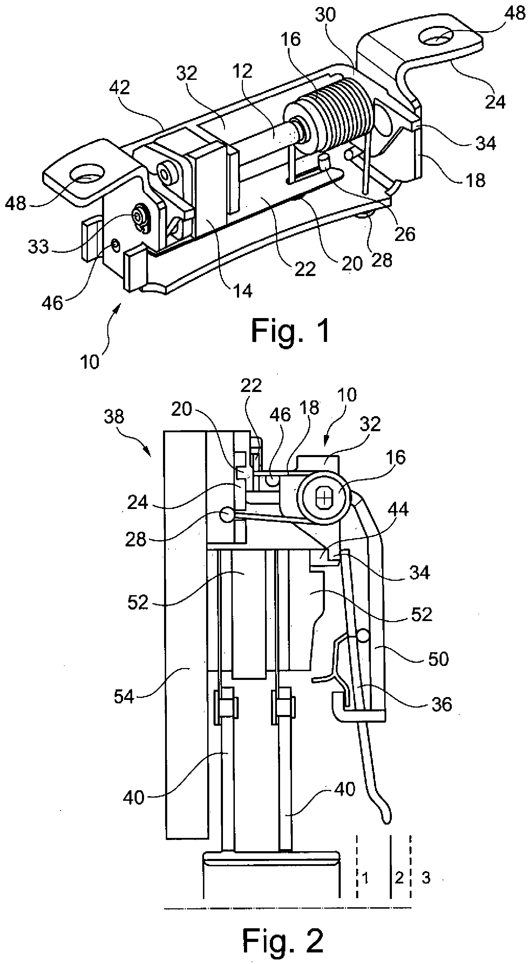

Die in Fig. 1 dargestellte Nachstelleinrichtung 10 weist eine Spindel 12 auf, auf die eine Spindelmutter 14 aufgeschraubt ist. Die Spindel 12 kann von einer Trommel 16 angetrieben werden, um die ein Verschwenkmittel zur vollständig bzw. ausschließlich kraftschlüssigen und/oder stufenlosen Verschleißnachstellung, insbesondere ein Schlingseil 18, angeordnet, insbesondere gewickelt, ist. Das Schlingseil 18 kann in einer schraubenförmigen Nut der Trommel 16 geführt sein. Ein erstes Ende 20 des Schlingseils 18 ist mit einem als Blattfeder ausgeführten ersten Federelement 22 verbunden. Das erste Federelement 22 ist mit einem Halter 24 verbunden, wobei die Vorspannung des ersten Federelements 22 mit einer mit dem Halter 24 verschraubten Einstellschraube 26 eingestellt werden kann. Die notwendige Haltekraft, damit das Schlingseil 18 nicht auf der Trommel 16 rutscht, wird durch das vorgespannte erste Federelement 22 erzeugt. Ein zweites Ende 28 des Schlingseils 18 ist direkt mit dem Halter 24 verbunden. Die Spindel 12 ist mit Hilfe eines Montagebügels 30 in einer schwenkbar mit dem Halter 24 verbundenen Wippe 32 eingesetzt. Die Wippe 32 ist über Haltebolzen 33 drehbar in dem Halter 24 gelagert. Die Wippe 32 weist im dargestellten Ausführungsbeispiel zwei abstehende Ansätze 34 auf, an denen ein Betätigungselement 36 einer Reibungskupplung 38 bei einem zu starken Verschleiß einer Kupplungsscheibe 40 anschlagen kann, um mit der Wippe 32 die Spindel 12 zu verschwenken. Bei diesem Verschwenken kann das Schlingseil 18 die Trommel 16 und damit die Spindel 12 verdrehen, so dass die Spindelmutter 14 axial entlang der Spindel 12 bewegt werden kann. Die Spindelmutter 14 kann dabei ein als Blattfeder ausgestaltetes zweites Federelement 42 verspannen, das dadurch an einem als Rampenring ausgestaltetes Nachstellelement 44 eine Federkraft aufbringen kann. Bei einem Öffnen der Reibungskupplung 38 ist durch die Federkraft des zweiten Federelements 42 die Selbsthemmung der Spindel 12 so hoch, dass die Federkraft des ausgelenkten ersten Federelements 22 ausreicht das Schlingseil 18 an der Trommel 16 durchrutschen zu lassen, so dass ein unbeabsichtigtes Zurückdrehen der Trommel 16 und der Spindel 12 vermieden ist. Die Wippe 32 kann dann in den Ausgangszustand zurückbewegt werden, bis die die Wippe 32 an einem Anschlag 46 anschlägt und in einer definierten Ausgangslage verbleibt. Zwischenzeitlich ist eine von dem Betätigungselement 36 auf das Nachstellelement 44 aufgebrachte Kraft deutlich zurückgegangen, so dass die Federkraft des zweiten Federelements 42 ausreicht den in dem zweiten Federelement 22 gespeicherten Nachstellweg an das Nachstellelement 44 abzugeben und durch eine Bewegung des Nachstellelements 44 einen verschleißbedingten vergrößerten Betätigungsweg des Betätigungselements 36 wieder auszugleichen. Die maximal benötigte Nachstellkraft zum Bewegen des Nachstellelements 44 ist dabei kleiner als die minimale Kraft des zweiten Federelements 42. Über Langlöcher 48 des Halters 24 kann die Nachstelleinrichtung 10 mit einem Kupplungsdeckel 50 oder einer Anpressplatte 52 verbunden werden.

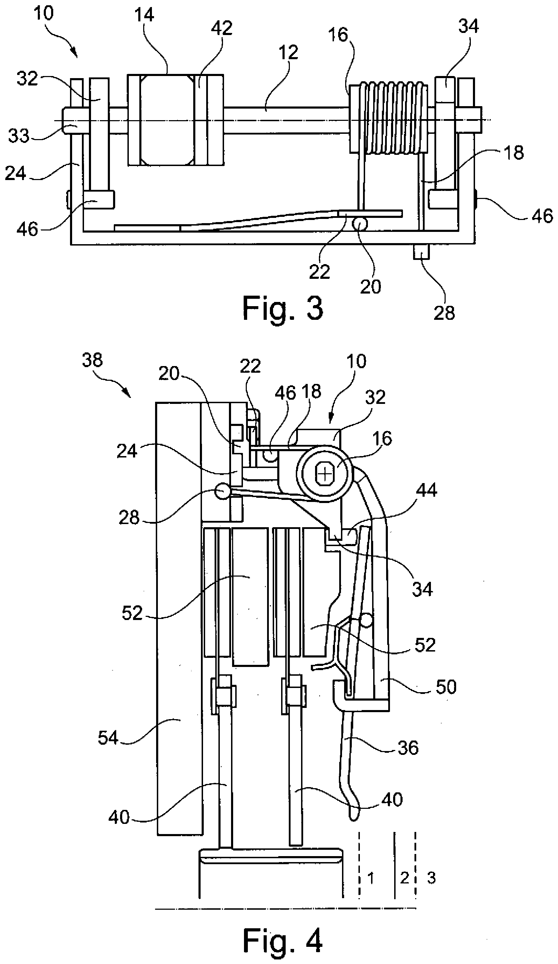

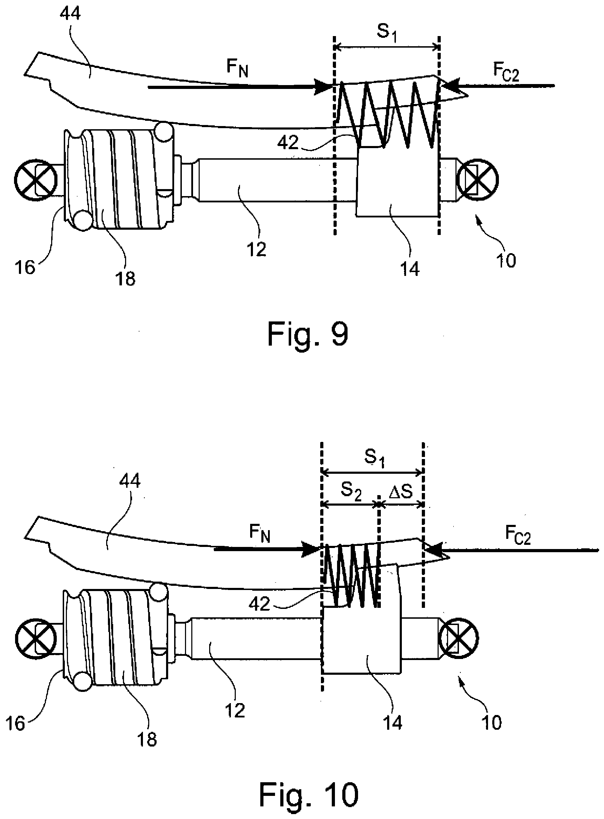

Ist die Reibungskupplung 38 geschlossen und kein Verschleiß detektiert, wie in Fig. 2 dargestellt, hält das erste Federelement 22 die Wippe 32 aufgrund der definierten Vorspannung des ersten Federelements 22 an dem Anschlag 46. Das zweite Federelement 42 ist vorgespannt und liegt an dem Nachstellelement 44 an. Wie in Fig. 3 dargestellt ist in diesem Zustand das erste Federelement 22 nicht ausgelenkt. Wird die Reibungskupplung 38, wie in Fig. 4 dargestellt geöffnet, trennen sich die Kupplungsscheiben 40 der dargestellten Zweischeibenkupplung. Die Anpressplatten 52 sowie das Nachstellelement 44 bewegen sich in Richtung des Kupplungsdeckels 50. In diesem Zustand liegt das ausgelenkte Betätigungselement 36 nicht an dem Ansatz 34 der Wippe 32 an. Die Position der Wippe 32 bleibt unverändert. Auch in diesem Zustand ist das erste Federelement 22 nicht ausgelenkt. Das zweite Federelement 42 liegt weiterhin mit einer Vorspannung an dem Nachstellelement 44 an, wie in Fig. 9 dargestellt. In diesem Zustand weist das zweite Federelement 42 eine Federlänge S₁ und eine Federkraft F_{C2} auf, die geringer als die Hemmungskraft F_{N} des festgeklemmten Nachstellelements 44 ist. Die erreichbare Vorspannung ist so ausgelegt, dass sie größer als die maximale Nachstellkraft ist. Dadurch ist eine Nachstellung bei einem Auftreten von Verschleiß gewährleistet. Es stellt sich ein Kräftegleichgewicht zwischen dem Nachstellelement 44 und dem zweiten Federelement 42 ein. Gleiches gilt, wenn der Reibwert zwischen dem Nachstellelement 44, der Anpressplatte 52 und dem Betätigungselement 36 sinkt. Wird die Reibungskupplung 38 geschlossen, werden die Anpressplatten 52 zum Verpressen der Kupplungsscheiben 40 auf eine Gegenplatte 54 zu bewegt, so dass sich wieder der in Fig. 2 dargestellte Ausgangszustand einstellt.

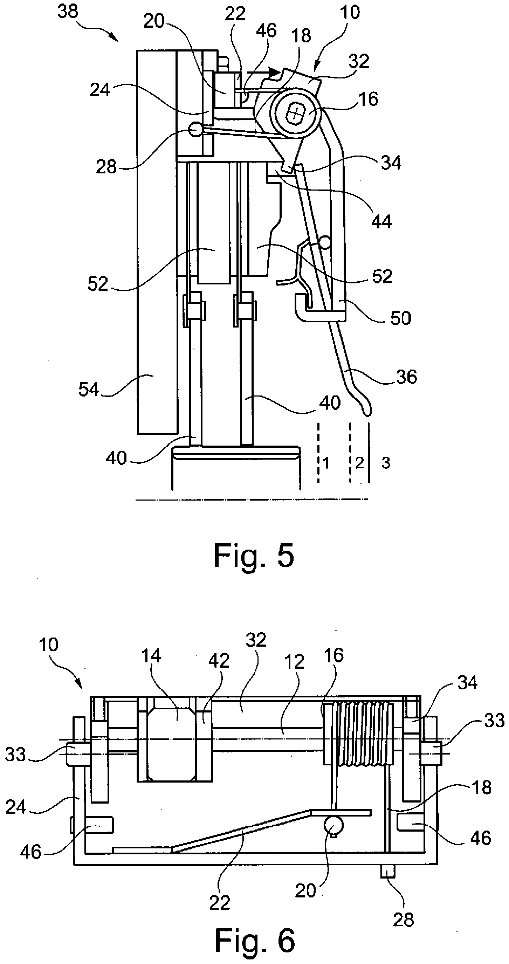

Tritt Verschleiß an den Kupplungsbelägen der Kupplungsscheiben 40 auf, ändert sich die Winkellage des Betätigungselements 36, wie in Fig. 5 dargestellt. Diese Änderung der Position des Betätigungselements 36 kann durch die Wippe 32 detektiert und die resultierende Auslenkung auf die Trommel 16 übertragen werden. Die Kraft zum Auslenken der Wippe 32 wird von dem Betätigungselement 36 bereit gestellt. Durch die Fixierung des Schlingbandes 18 mit dem Halter 24 und der Auslenkung der Wippe 32 durch den detektierten Verschleiß wird die Trommel 16 gedreht. Die Drehbewegung der Trommel 16 treibt die Spindel 12 an, welche die Spindelmutter 14 um den Nachstellweg verschiebt. Das zweite Federelement 42 wird dadurch zwischen der Spindelmutter 42 und dem zwischen der Anpressplatte 52 und dem Betätigungselement 36 verklemmten Nachstellelement 44 verspannt. Da diese Funktion im geschlossenen Zustand der Reibungskupplung 38 ausgeführt wird, kann durch die große auf das Verstellelement 44 aufgebrachte Reibungskraft das Verstellelement 44 nicht angetrieben werden. Mit dem zweiten Federelement 42 kann der Nachstellweg gespeichert werden, um bei sinkender Nachstellkraft (Abhub) das Nachstellelement 44 anzutreiben. Die Kraft des Schlingbandes 18 und das daraus resultierende Moment sind größer als das Reibmoment der Spindel 12. Durch die Auslenkung der Wippe 32 folgt zusätzlich, dass wie in Fig. 6 dargestellt das erste Federelement 22 ausgelenkt und vorgespannt wird.

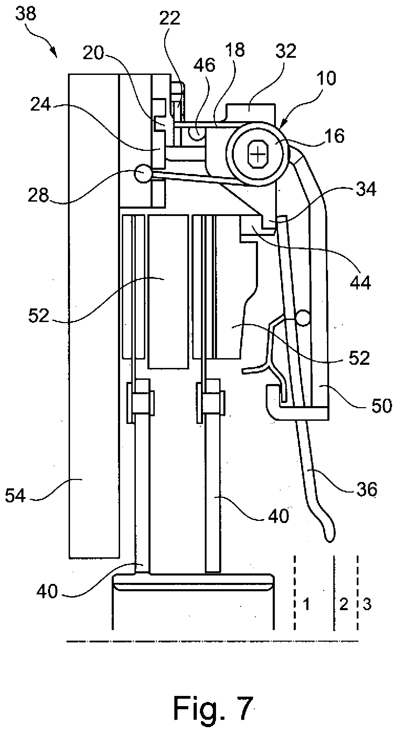

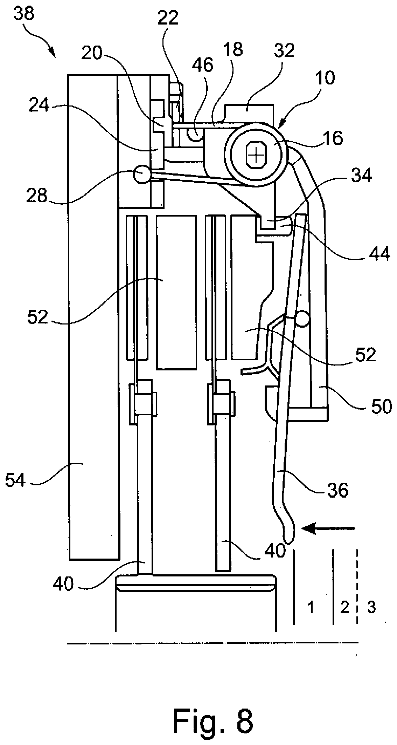

Die Abhubbewegung der Anpressplatte 52 bei Verschleiß kann in zwei Teilbereiche unterteilt werden. Im ersten Teilbereich wird die Reibungskupplung 38 soweit ausgerückt, bis die Wippe 32 wie im in Fig. 7 dargestellten Zustand wieder in ihre Ausgangslage zurückkehrt. Die Trommel 16 und die Spindel 12 drehen sich dabei nicht um ihre eigene Achse, da sie durch das Reibmoment der Spindel 12 gehalten und gegen ein Verdrehen gesichert werden. Während dieses Vorgangs entsteht zwischen dem Schlingseil 18 und der Trommel 16 eine Relativbewegung, so dass kein Zustand mehr vorliegt, in dem die Euler-Eytelwein-Gleichung gelten würde. Das Schlingseil 18 gelangt so ebenfalls in die Ausgangslage zurück. Im zweiten Teilbereich des Abhubs der Anpressplatte 52 zwischen der Einbaulage des Betätigungselements 36 und dem vollständig ausgeführten Abhub des Betätigungselements, wie in Fig. 8 dargestellt, sinkt die wirkende Federkraft des ersten Federelements 22. Wie in Fig. 10 dargestellt, weist in diesem Zustand das zweite Federelement 42 nur noch eine Federlänge S₂ auf, die um einen Federweg ΔS kleiner als die ursprüngliche Federlänge S₁ ist. Dadurch hat sich die Federkraft F_{C2} des zweiten Federelements 42 erhöht, während sich durch die Abhubbewegung des Anpressplatte 52 die auf das Nachstellelement 44 wirkenden Reibungskräfte verringern und auch die Hemmungskraft F_{N} des Nachstellelements 44 sinkt. Die Federkraft F_{C2} des zweiten Federelements 42 kann dadurch die Hemmungskraft F_{N} des Nachstellelements 44 überwinden und das Nachstellelement 44 bewegen. Dadurch kann ein Verdrehen des Nachstellelements 44 mit Hilfe der Federkraft des zweiten Federelements 42 erfolgen, wodurch die ursprüngliche Lage des Betätigungselements 36 trotz erfolgtem Verschleiß der Reibbeläge der Kupplungsscheibe 40 wiederhergestellt werden kann. Die durch den Verschleiß verursachte Wegdifferenz kann durch aufeinander abgleitende Rampen 60, 62 des Nachstellelements 44 und der Anpressplatte 52 ausgeglichen werden.

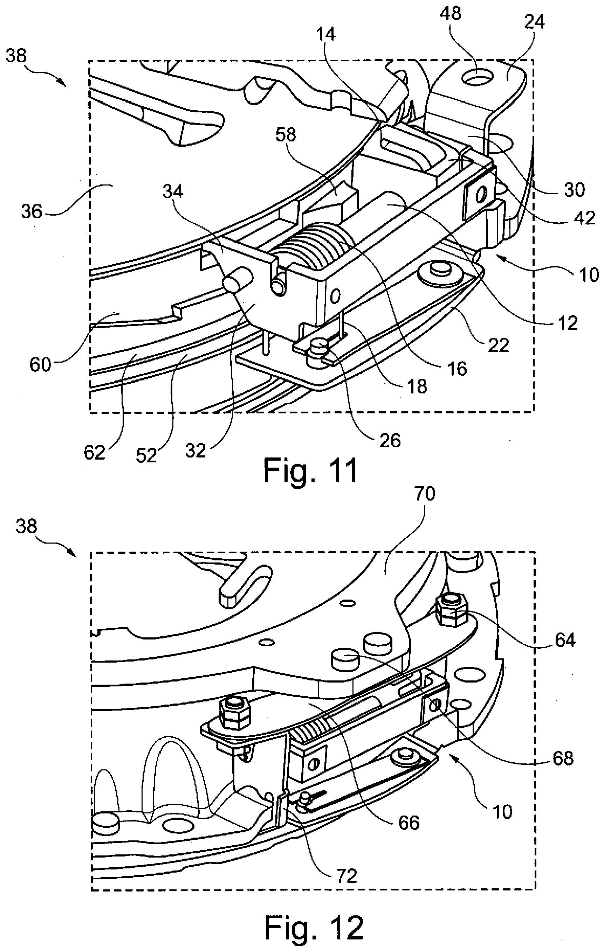

Wie in Fig. 11 dargestellt, kann der Ansatz 34 der Wippe 32 durch eine Aussparung 56 des Nachstellelements 44 hindurchragen, so dass das Betätigungselement 36 bei einem sensierten Verschleiß an dem Ansatz 34 anschlagen kann. Das Nachstellelement 44 weist ferner einen nach radial außen weisen Absatz 58 auf, an dem das zweite Federelement 42 angreifen kann, um eine Rampe 60 des Nachstellelements 44 über eine Gegenrampe 62 der Anpressplatte 52 zu bewegen. Wie in Fig. 12 dargestellt, kann die Nachstelleinrichtung 10 über die Langlöcher 48 mit Hilfe von Schrauben 64 mit einer Blattfeder 66 verschraubt werden. Die Blattfeder 66 ist mit Nieten 68 mit einer Deckelhalterung 70 zur Befestigung des Kupplungsdeckels 50 vernietet. Mit Hilfe der Blattfeder 66 kann ein Transportlagenausgleich erreicht werden. Der Transportlagenausgleich dient zum Ausgleichen der Position Nachstelleinrichtung 10 in Transportlage gegenüber dem eingebauten Zustand der Reibungskupplung 38. Dies ermöglicht es die Nachstelleinrichtung 10 am Kupplungsdeckel 50 zu montieren.

Die Blattfeder 66 hat den Vorteil, dass sie sowohl die Führung der Nachstelleinrichtung 10 als auch die Abstützung der Nachstelleinrichtung 10 am Kupplungsdeckel 50 erfüllen kann. Die vorgesehene Blattfeder 66 ist mit der Deckelhalterung 70 vernietet und mit der Nachstelleinrichtung 10 verschraubt. Die Verschraubungen 64 ermöglichen es, dass die Verschiebung der Blattfeder 66 zwischen den beiden Einbaupositionen in den Langlöchern 48 ausgeglichen werden kann. Ein Ausbeulung der Blattfedern 66 wird dadurch vermieden. Im eingebauten Zustand wirkt die Blattfederkraft gegen den Kupplungsdeckel 50. Im Betrieb der Reibungskupplung 38 erfährt die Nachstelleinrichtung 10 durch die wirkende Zentripetalkraft eine Kraftwirkung nach außen. Um diese Wirkung am Kupplungsdeckel 50 im unteren Bereich abzustützen, sind tangential abstehende Halteanschläge 72 an dem Halter 24 angebracht. Im oberen Bereich übernimmt diese Aufgabe die Blattfeder. Der Halter 24 stützt zusammen mit dem Transportlagenausgleich Vorspann- sowie die Nachstellkraft des zweiten Federelements 42 am Kupplungsdeckel 50 ab.

Die vorangegangenen Erläuterungen und Ausführungsbeispiele betreffen insbesondere eine Nachstelleinrichtung 10 für eine Reibungskupplung 38 eines Kraftfahrzeugs, mit einer Spindel 12, einer auf der Spindel 12 aufgeschraubten Spindelmutter 14 zum Mitnehmen eines Nachstellelements 44 zur Nachstellung eines verschließbedingten Fehlabstands zwischen einer Gegenplatte 54 und einer Anpressplatte 52 zum Verpressen einer Kupplungsscheibe 40 zwischen der Anpressplatte 52 und der Gegenplatte 54, und einem im Wesentlichen kraftschlüssigen und/oder im Wesentlichen stufenlosen Verschwenkmittel zum Verschwenken der Spindel 12 zur Nachstellung des verschließbedingten Fehlabstands, sowie eine Reibungskupplung mit einer solchen Nachstelleinrichtung 10.

### Bezugszeichenliste

- 10: Nachstelleinrichtung
- 12: Spindel
- 14: Spindelmutter
- 16: Trommel
- 18: Schlingseil
- 20: erstes Ende
- 22: erstes Federelement
- 24: Halter
- 26: Einstellschraube
- 28: zweites Ende
- 30: Montagebügel
- 32: Wippe
- 33: Haltebolzen
- 34: Ansatz
- 36: Betätigungselement
- 38: Reibungskupplung
- 40: Kupplungsscheibe
- 42: zweites Federelement
- 44: Nachstellelement
- 46: Anschlag
- 48: Langloch
- 50: Kupplungsdeckel
- 52: Anpressplatte
- 54: Gegenplatte
- 56: Aussparung
- 58: Absatz
- 60: Rampe
- 62: Gegenrampe
- 64: Schraube
- 66: Blattfeder
- 68: Niet
- 70: Deckelhalterung
- 72: Halteanschlag

## Patentansprüche

1. Nachstelleinrichtung für eine Reibungskupplung (38) eines Kraftfahrzeugs, mit einer Spindel (12), einer auf der Spindel (12) aufgeschraubten Spindelmutter (14) zum Mitnehmen eines Nachstellelements (44) zur Nachstellung eines verschließbedingten Fehlabstands zwischen einer Gegenplatte (54) und einer Anpressplatte (52) zum Verpressen einer Kupplungsscheibe (40) zwischen der Anpressplatte (52) und der Gegenplatte (54), und einem im Wesentlichen kraftschlüssigen und/oder im Wesentlichen stufenlosen Verschwenkmittel zum Verschwenken der Spindel (12) zur Nachstellung des verschließbedingten Fehlabstands, **dadurch gekennzeichnet, dass** das Verschwenkmittel ein Schlingseil (18) aufweist, das um eine Trommel (16) gewickelt ist, die mit der Spindel (12) verbunden ist.

2. Nachstelleinrichtung nach Anspruch 1, wobei das Schlingseil (18) an einem ersten Ende (20) mit einem ersten Federelement (22) verbunden ist.

3. Nachstelleinrichtung nach Anspruch 1 oder 2, wobei ein von der Spindelmutter (14) verspannbares zweites Federelement (42) zum Übertragen einer Verstellkraft von der Spindelmutter (14) auf das Nachstellelement (44) vorgesehen ist.

4. Nachstelleinrichtung nach einem der Ansprüche 1 bis 3, wobei die Spindel (12) um eine exzentrisch zur Mittelachse der Spindel (12) verlaufende Schwenkachse verschwenkbar ist.

5. Nachstelleinrichtung nach einem der Ansprüche 1 bis 4, wobei die Spindel (12) in einer schwenkbar mit einem Halter (24) verbundenen Wippe (32) gelagert ist, wobei die Wippe (32) insbesondere über einen abstehenden Ansatz (34) von einem Betätigungselement (36) zum Anpressen der Anpressplatte (52) verschwenkbar ist, wobei die Trommel (16) durch das Verschwenken der Wippe (32) verdrehbar ist.

6. Nachstelleinrichtung nach einem der Ansprüche 2 bis 5, wobei die Federkraft und die Vorspannung des ersten Federelements (22) sowie die Federkraft und die Vorspannung des zweiten Federelements (42) derart gewählt sind, dass bei einem Verdrehen der Trommel (16) bei einem Anpressen der Anpressplatte (52) das Schlingseil (18) kraftschlüssig, vorzugsweise reibschlüssig, mit der Trommel (16) verbunden ist und bei einem Abheben der Anpressplatte (52) von der Gegenplatte (54) das Schlingseil (18) an der Trommel (16) durchrutscht.

7. Nachstelleinrichtung nach einem der Ansprüche 2 bis 6, wobei die Spindel (12) in einem Halter (24) insbesondere zur Befestigung mit einem Kupplungsdeckel (50) aufgenommen ist, wobei das erste Ende (20) des Schlingseils (18) über das erste Federelement (22) und ein zweites Ende (28) des Schlingseils direkt mit dem Halter (24) verbunden ist.

8. Reibungskupplung, insbesondere Zweischeibenkupplung, für ein Kraftfahrzeug, mit einer Gegenplatte (54), einer relativ zu der Gegenplatte (54) bewegbaren Anpressplatte (52) zum Verpressen einer Kupplungsscheibe (40) zwischen der Gegenplatte (54) und der Anpressplatte (52), einem Kupplungsdeckel (50) zum zumindest teilweisen Abdecken der Anpressplatte (52) und einer insbesondere mit dem Kupplungsdeckel (52) verbundenen Nachstelleinrichtung (10) nach einem der Ansprüche 1 bis 7 zur Nachstellung eines verschleißbedingten Fehlabstands der Anpressplatte (52) zur Gegenplatte (54).

9. Reibungskupplung nach Anspruch 8, wobei die Nachstelleinrichtung (10) radial außerhalb zur Anpressplatte (52) angeordnet ist.

10. Reibungskupplung nach Anspruch 8 oder 9, wobei die Nachstelleinrichtung (10) über mindestens ein Langloch (48) mit dem Kupplungsdeckel (50) oder der Anpressplatte (52) verbunden ist, wobei in einer ersten Endlage des Langlochs (48) eine Betätigung der Nachstelleinrichtung (10) außer Funktion gesetzt ist und in einer zweiten Endlage des Langlochs (48) eine Betätigung der Nachstelleinrichtung (10) in Funktion gesetzt ist.

## Claims

1. Readjustment device for a friction clutch (38) of a motor vehicle, having a spindle (12), having a spindle nut (14) which is screwed onto the spindle (12) and which serves for driving along a readjustment element (44) for the purposes of readjustment of a wear-induced incorrect spacing between a counterpart plate (54) and a pressure plate (52) for the pressing of a clutch disk (40) between the pressure plate (52) and the counterpart plate (54), and having a substantially non-positively locking and/or a substantially continuously variable pivoting means for pivoting the spindle (12) for the purposes of readjustment of the wear-induced incorrect spacing, **characterized in that** the pivoting means has a wraparound cable (18) which is wound around a drum (16) which is connected to the spindle (12).

2. Readjustment device according to Claim 1, wherein the wraparound cable (18) is connected at a first end (20) to a first spring element (22).

3. Readjustment device according to Claim 1 or 2, wherein a second spring element (42), which can be braced by the spindle nut (14), is provided for transmitting an adjustment force from the spindle nut (14) to the readjustment element (44).

4. Readjustment device according to one of Claims 1 to 3, wherein the spindle (12) is pivotable about a pivot axis running eccentrically with respect to the central axis of the spindle (12).

5. Readjustment device according to one of Claims 1 to 4, wherein the spindle (12) is mounted in a rocker (32) which is connected pivotably to a holder (24), wherein the rocker (32) can, in particular by way of a protruding projection (34), be pivoted by an actuating element (36) for the purposes of causing the pressure plate (52) to impart the pressing action, wherein the drum (16) can be rotated by way of the pivoting of the rocker (32).

6. Readjustment device according to one of Claims 2 to 5, wherein the spring force and the preload of the first spring element (22) and the spring force and the preload of the second spring element (42) are selected such that, during a rotation of the drum (16), when the pressure plate (52) is imparting a pressing action, the wraparound cable (18) is connected in non-positively locking fashion, preferably in frictionally engaging fashion, to the drum (16) and, when the pressure plate (52) lifts off from the counterpart plate (54), the wraparound cable (18) slips on the drum (16).

7. Readjustment device according to one of Claims 2 to 6, wherein the spindle (12) is received in a holder (24) in particular for fastening to a clutch cover (50), wherein the first end (20) of the wraparound cable (18) is connected to the holder (24) via the first spring element (22), and a second end (28) of the wraparound cable is connected to the holder (24) directly.

8. Friction clutch, in particular two-disk clutch, for a motor vehicle, having a counterpart plate (54), having a pressure plate (52) which is movable relative to the counterpart plate (54) and which serves for the pressing of a clutch disk (40) between the counterpart plate (54) and the pressure plate (52), having a clutch cover (50) for at least partially covering the pressure plate (52), and having a readjustment device (10) according to one of Claims 1 to 7 which is connected in particular to the clutch cover (52) and which serves for the purposes of readjustment of a wear-induced incorrect spacing of the pressure plate (52) to the counterpart plate (54).

9. Friction clutch according to Claim 8, wherein the readjustment device (10) is arranged radially outside the pressure plate (52).

10. Friction clutch according to Claim 8 or 9, wherein the readjustment device (10) is connected by way of at least one slot (48) to the clutch cover (50) or to the pressure plate (52), wherein, in a first end position of the slot (48), an actuation of the readjustment device (10) is rendered non-functional, and in a second end position of the slot (48), an actuation of the readjustment device (10) is rendered functional.

## Revendications

1. Dispositif de rattrapage pour un embrayage à friction (38) de véhicule automobile, comprenant une broche (12), un écrou de broche (14) vissé sur la broche (12) pour entraîner un élément de rattrapage (44) pour rattraper une distance incorrecte due à l'usure entre une plaque conjuguée (54) et une plaque de pressage (52) pour presser un disque d'embrayage (40) entre la plaque de pressage (52) et la plaque conjuguée (54), et un moyen de pivotement sensiblement par engagement par force et/ou sensiblement sans gradin pour faire pivoter la broche (12) pour le rattrapage de la distance incorrecte due à l'usure, **caractérisé en ce que** le moyen de pivotement présente un câble d'enroulement (18) qui est enroulé autour d'un tambour (16) qui est connecté à la broche (12).

2. Dispositif de rattrapage selon la revendication 1, dans lequel le câble d'enroulement (18) est connecté au niveau d'une première extrémité (20) à un premier élément de ressort (22).

3. Dispositif de rattrapage selon la revendication 1 ou 2, dans lequel un deuxième élément de ressort (42) pouvant être serré par l'écrou de broche (14) est prévu pour transmettre une force de réglage de l'écrou de broche (14) à l'élément de rattrapage (44).

4. Dispositif de rattrapage selon l'une quelconque des revendications 1 à 3, dans lequel la broche (12) peut pivoter autour d'un axe de pivotement s'étendant de manière excentrique par rapport à l'axe médian de la broche (12).

5. Dispositif de rattrapage selon l'une quelconque des revendications 1 à 4, dans lequel la broche (12) est supportée dans une bascule (32) connectée de manière pivotante à un support (24), la bascule (32) pouvant notamment être pivotée par le biais d'une pièce saillante (34) par un élément d'actionnement (36) pour presser la plaque de pressage (52), le tambour (16) pouvant être tourné par le pivotement de la bascule (32).

6. Dispositif de rattrapage selon l'une quelconque des revendications 2 à 5, dans lequel la force de ressort et la précontrainte du premier élément de ressort (22) ainsi que la force de ressort et la précontrainte du deuxième élément de ressort (42) sont choisies de telle sorte que dans le cas d'une rotation du tambour (16) lors d'un pressage de la plaque de pressage (52), le câble d'enroulement (18) soit connecté par engagement par force, de préférence par engagement par friction, au tambour (16), et dans le cas d'un soulèvement de la plaque de pressage (52) de la plaque conjuguée (54), le câble d'enroulement (18) glisse sur le tambour (16) .

7. Dispositif de rattrapage selon l'une quelconque des revendications 2 à 6, dans lequel la broche (12) est reçue dans un support (24), en particulier pour la fixation à un couvercle d'embrayage (50), la première extrémité (20) du câble d'enroulement (18) étant connectée au support (24) par le biais du premier élément de ressort (22) et une deuxième extrémité (28) du câble d'enroulement étant connectée directement au support (24).

8. Embrayage à friction, en particulier embrayage à deux disques, pour un véhicule automobile, comprenant une plaque conjuguée (54), la plaque de pressage (52) pouvant être déplacée par rapport à la plaque conjuguée (54) pour presser un disque d'embrayage (40) entre la plaque conjuguée (54) et la plaque de pressage (52), un couvercle d'embrayage (50) pour recouvrir au moins en partie la plaque de pressage (52) et un dispositif de rattrapage (10) connecté notamment au couvercle d'embrayage (52) selon l'une quelconque des revendications 1 à 7, pour le rattrapage d'une distance incorrecte due à l'usure de la plaque de pressage (52) par rapport à la plaque conjuguée (54) .

9. Embrayage à friction selon la revendication 8, dans lequel le dispositif de rattrapage (10) est disposé radialement à l'extérieur par rapport à la plaque de pressage (52).

10. Embrayage à friction selon la revendication 8 ou 9, dans lequel le dispositif de rattrapage (10) est connecté par le biais d'au moins un trou oblong (48) au couvercle d'embrayage (50) ou à la plaque de pressage (52), et dans une première position d'extrémité du trou oblong (48), un actionnement du dispositif de rattrapage (10) étant mis hors fonctionnement et, dans une deuxième position d'extrémité du trou oblong (48), un actionnement du dispositif de rattrapage (10) étant mis en fonctionnement.
